# EUROPÄISCHE PATENTSCHRIFT

(11) **EP 1 504 249 B1**
(45) Veröffentlichungstag und Bekanntmachung des Hinweises auf die Patenterteilung: **07.03.2007**
(21) Anmeldenummer: 03720252.0
(22) Anmeldetag: 27.03.2003
(51) Int. Cl.: G01N 21/35

(54) **INFRAROT-SENSOR FÜR GASMESSGERÄTE MIT EXPLOSIONSSCHUTZ**
INFRARED SENSOR WITH EXPLOSION-PROOF PROTECTION FOR GAS METERING APPLIANCES
CAPTEUR INFRAROUGE A PROTECTION ANTIDEFLAGRANTE POUR APPAREILS DE MESURE DE GAZ

(30) Priorität: 14.05.2002 DE 10221954
(43) Veröffentlichungstag der Anmeldung: 09.02.2005
(73) Patentinhaber: MSA Auer GmbH, 12059 Berlin (DE)
(72) Erfinder: SCHUBERT, Axel, 12309 Berlin (DE)
(74) Vertreter: Wablat, Wolfgang
(86) Internationale Anmeldenummer: PCT/DE2003/001047
(87) Internationale Veröffentlichungsnummer: WO 2003/095990

(56) Entgegenhaltungen:
- DE-A- 1 773 602
- DE-A- 2 303 037
- DE-A- 19 951 163
- US-A- 3 788 751
- US-A- 3 860 818
- US-A- 4 709 150
- US-A- 6 155 160
- US-B1- 6 469 303
- PATENT ABSTRACTS OF JAPAN vol. 2002, no. 05, 3. Mai 2002 (2002-05-03) -& JP 2002 022655 A (RIKEN KEIKI CO LTD), 23. Januar 2002 (2002-01-23) & DATABASE WPI Section EI, Week 200223 Derwent Publications Ltd., London, GB; Class S03, AN 2002-177554 & JP 2002 022655 A (RIKEN KEIKI KK), 23. Januar 2002 (2002-01-23)
- "Grundlagen Explosionsschutz" CEAG SICHERHEITSTECHNIK GMBH, [Online] 2000, Seiten 1-66, XP002248511 Soest, Deutschland Gefunden im Internet: <URL:http://fmysql.tu-graz.ac.at/~zv600/61 0/doc/ceag.pdf> [gefunden am 2003-07-21]

## Beschreibung

Die Erfindung betrifft einen Infrarot-Sensor für Gasmessgeräte mit einer Explosionsschutzzulassung, bestehend aus einem Gehäuse, in dessen mit der Gasatmosphäre über ein Staub- und Feuchteschutzfilter in Verbindung stehender Messkammer eine Infrarot-Quelle und ein Infrarot-Detektor angeordnet sind.

Messgeräte zum Erkennen von Gasgefahren durch explosionsfähige oder gesundheitsschädliche Gase oder durch Sauerstoffmangel bzw. -überschuss werden in vielen Bereichen der Industrie, wie zum Beispiel im Bergbau und in der chemischen Industrie, sowie im Umwelt- und Katastrophenschutz eingesetzt. Zum Erfassen und Messen der betreffenden Gase sind diese Geräte mit Infrarot-Gassensoren ausgerüstet, die im Innenraum eines Gehäuses über einen Infrarot-Sensor und einen Infrarot-Detektor verfügen, wobei der Gaszutritt in den Gehäuseinnenraum über Filter erfolgt. Der Infrarot-Detektor erfasst als Maß für die Gaszusammensetzung die Wärmespektren, die nach Durchgang der von der Infrarot-Quelle erzeugten Strahlen durch das betreffende Gas erzeugt werden.

Damit die Infrarot-Sensoren höchsten Sicherheitsanforderungen in Bezug auf den Explosionsschutz und damit den Zündschutz gerecht werden, sind die Infrarot-Quelle und der Infrarot-Detektor bekanntermaßen in einem druckfest verkapselten Gehäuse untergebracht, das heißt, entsprechend der Zündschutzart "d" ausgebildet. Allein nach dieser Zündschutzart hergestellte Infrarot-Sensoren sind nach den geltenden Explosionsschutzbestimmungen aber nicht für die Anwendung in der sogenannten Zone "0" mit ständiger, häufiger oder langzeitiger Gasgefahr vorgesehen, wenn auch die Einsatzhäufigkeit in dieser Zone vergleichsweise selten ist und der Anwendungsbereich von Gasmessgeräten mit Infrarot-Sensoren zu 95% in der Zone "1" liegt, das heißt, in Bereichen, in denen die Gefahr des Auftretens gefährlicher Gase nur gelegentlich besteht. Der Gaseintritt in das Gehäuse erfolgt über ein druckfest in den Gehäusemantel eingepasstes und in sich druckfestes Sintermaterial als Filter. Bei einer Beschädigung einer aus Kostengründen vorzugsweise eingesetzten Lampe als Infrarot-Quelle durch Glasbruch und einer dadurch bedingten Entzündung der Gase an der heißen Wendel der Lampe, kommt es aufgrund der druckfesten Verkapselung dennoch nicht zu einer Explosion, da die im Gehäuseinneren entzündeten Gase nicht nach außen gelangen können, das heißt jegliche Zündung nach außen verhindert wird. Diese Infrarot-Sensoren sind jedoch insofern nachteilig, als die druckfeste Ausführung des Gehäuses und des Gaszutritts und -austritts eine hohe Fertigungsgenauigkeit erfordert und daher sehr aufwendig und teuer ist und der Gasaustausch über das druckfeste Filtermaterial wegen des hohen Widerstandes nur sehr langsam erfolgt.

Bei einem bekannten Infrarot-Sensor wird dieser Nachteil dadurch beseitigt, dass allein die Infrarot-Quelle druckfest abgekapselt ist und die Infrarot-Strahlen über ein Saphirfenster zum Infrarot-Detektor gelangen. Dadurch ist zwar ein freier Gasaustausch über den Infrarot-Sensor möglich, jedoch wird durch das Saphirfenster der Strahlengang und damit der Infrarot-Bereich gedämpft und mithin das Messergebnis durch Signalverluste beeinträchtigt. Zudem ist der Prüfaufwand für die Druckfestigkeit von mindestens 10 bar beträchtlich.

JP2002022655 offenbart einen Infrarotsensor mit Infrarotquelle und Infrarotdetektor, der sich aus Gründen des Explosionsschutzes in vier einander umgebenden Gehäusen befindet. Das innerste Gehäuse bildet die Messkammer, das nächste Gehäuse ist explosionssicher, das nächste Gehäuse dient als Bruchschutz und das äusserste Gehäuse dient als Wasserschutz.

Der Erfindung liegt daher die Aufgabe zugrunde, einen kostengünstigen Infrarot-Sensor für Gasmessgeräte für den Einsatz in der Gefahrenzone "1" zur Verfügung zu stellen, der mit geringem Fertigungs- und Prüfaufwand herstellbar ist, einen schnellen Gasaustausch und exakte Messergebnisse gewährleistet und der in einer vervollkommneten Ausführungsform auch für den Einsatz in der Gefahrenzone "0" mit ständiger oder häufiger Gasgefahr geeignet ist.

Erfindungsgemäß wird die Aufgabe mit einem gemäß den Merkmalen der Patentansprüche ausgebildeten Infrarot-Sensor gelöst.

Der Grundgedanke der Erfindung besteht mit anderen Worten darin, dass der Infrarot-Sensor von einem die Messkammer oder die Messstrecke, in der die Infrarot-Quelle und der Infrarot-Detektor angeordnet sind, umhüllenden und bis zu einer bestimmten Stoßenergie schlagsicher ausgeführten Schutzgehäuse umhüllt ist, in oder an dem ein hochpermeables Staub- und Feuchteschutzfilter gleichermaßen schlaggeschützt angebracht ist. Das schlagsichere Schutzgehäuse verhindert sowohl die Zerstörung der Infrarot-Quelle und die damit verbundene Zündgefahr als auch die Beschädigung des Staub- und Feuchteschutzfilters, der ebenfalls der Verminderung der Zündgefahr der Gase dient. Der so mit geringem Herstellungs- und Prüfaufwand herstellbare Sensor (Zündschutzart "e", erhöhte Sicherheit) kann in der sogenannten Zone "1", die ca. 95% aller Fälle umfasst, in denen Messungen vorgenommen werden, eingesetzt werden. Der Gasfluss durch die Messkammer erfolgt hier ohne wesentliche Zeitverzögerung.

Nach einem alternativ mit den zuvor genannten Merkmalen kombinierten weiteren wichtigen Erfindungsmerkmal ist das schlagsichere Schutzgehäuse einschließlich der an diesem angebrachten Staub- und Feuchteschutzfilter für den Gasein- und -auslass bis zu einem bestimmten Innendruck druckfest ausgebildet. Der auf diese Art wahlweise weiterentwickelte Infrarot-Sensor kann aufgrund der Kombination von zwei Zündschutzarten, nämlich Zündschutzart "e", erhöhte Sicherheit (schlagsicher) und Zündschutzart "d" (druckfest), unter Inkaufnahme einer zeitlich verzögerten Gaszufuhr zur Messkammer aufgrund der druckfesten Ausführung des Staub- und Feuchteschutzfilters und eines entsprechend höheren Kostenaufwandes für die druckfeste Ausführung auch in der sogenannten Zone "0" mit ständiger, langzeitiger oder häufiger Gasgefahr eingesetzt werden.

Nach einem weiteren Merkmal der Erfindung sind die Infrarot-Quelle, für die erfindungsgemäß aufgrund des schlagsicher ausgeführten Schutzgehäuses eine kostengünstige Lampe eingesetzt werden kann, und der Infrarot-Detektor sowie die jeweilige Leistungsversorgung bzw. Elektronik eigensicher gefertigt, so dass die Gefahr des Zündens explosiver Gase zusätzlich verringert wird.

In weiterer Ausgestaltung der Erfindung ist die Messkammmer als in dem Schutzgehäuse angeordnetes separates Gehäuse ausgebildet, in dem die Infrarot-Quelle und der Infrarot-Detektor befestigt sind und das eine Gasaustauschöffnung aufweist. Diese Gasaustauschöffnung ist mit einem hochpermeablen Staub- und Feuchteschutzfilter abgedeckt.

Wenn die Gasmessung im Pumpenbetrieb erfolgt, wird das Gas über am Schutzgehäuse angebrachte Anschlussstutzen mit an diese anschließbaren Gasleitungen vorgenommen.

Zur Kompensation von Druck-, Feuchte- und Temperaturunterschieden bei der Gasmessung sind in der Messkammer, je nach Ausführung entweder in dem separaten inneren Gehäuse oder direkt im Innenraum des Schutzgehäuses, Druck-, Feuchte- und Temperatursensoren angeordnet.

Aus den unten beschriebenen Ausführungsbeispielen und den Ansprüchen ergeben sich weitere zweckmäßige Ausgestaltungen der Erfindung.

Ausführungsbeispiele der Erfindung werden anhand der Zeichnung näher erläutert. Es zeigen:
- Fig. 1: eine Schnittansicht eines erfindungsgemäß in Zündschutzart "e" schlagsicher ausgebildeten Infrarot-Sensors zur Gasbestimmung in der Zone "1" mit gelegentlicher Gasgefahr;
- Fig. 2: den Infrarot-Sensor nach Fig. 1 in einer konstruktiv abgewandelten Variante sowie mit einer Störgrößenkompensation;
- Fig. 3: eine erweiterte Ausführungsform des InfrarotSensors nach Fig. 1, jedoch in zwei Zündschutzarten, das heißt, in einer schlagfesten Ausbildung (Zündschutzart "e") und in einer druckfesten Verkapselung (Zündschutzart "d") zum Einsatz in der Zone "0" mit langzeitig oder häufig auftretender Gasgefahr;

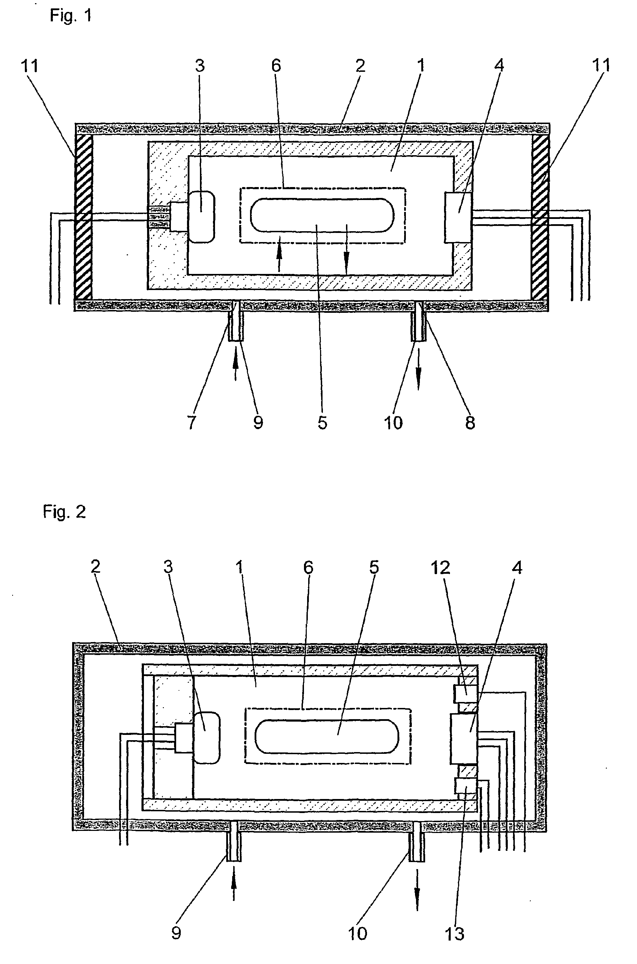

Der Infrarot-Sensor gemäß Fig. 1 umfasst eine Messkammer 1 und ein diese im Abstand umschließendes Schutzgehäuse 2 in bis zu einer Belastung von mindestens sieben Joule schlagsicherer Ausführung. Während die Messkammer 1 beispielsweise aus leicht verformbarem Aluminium besteht, wird für das Schutzgehäuse 2 ein hochfestes Material, zum Beispiel hochfestes Aluminium in einer bestimmten Wandstärke oder Edelstahl, verwendet. Die Messkammer 1 und das Schutzgehäuse 2 sind nicht nach Schutzart "d" druckfest ausgeführt. In die Stirnwände der zylindrisch ausgebildeten Messkammer 1 sind auf der einen Seite eine Lampe als Infrarot-Quelle 3 und auf der anderen Seite ein Infrarot-Detektor 4 eingeklebt. Während als Infrarot-Quelle 3 eine kostengünstige Lampe eingesetzt wird, ist der Infrarot-Detektor 4 ein Halbleiterdetektor, wie zum Beispiel ein Pyrosensor, eine Fotodiode oder eine Thermosäule. Der Halbleiterdetektor ist aufgrund seiner geringen Leistung eigensicher ausgeführt ist. Die Lampe 3 wird über eine eigensichere Leistungsversorgung betrieben, so dass auch aus dieser Sicht keine Zündgefahr besteht. In der Zylinderwand der Messkammer 1 (Messzylinders, separates Innengehäuse) befindet sich eine langgestreckte Gasaustauschöffnung 5, die mit einem Staub- und Feuchteschutzfilter 6 in der Schutzart IP44 verschlossen ist. Der Staub- und Feuchteschutz für die Messkammer 1 kann in Form einer Metallgaze oder eines hochpermeablen Kunststoffgehäuses oder auch eines Sintermaterials ausgeführt sein. Das Staub- und Feuchteschutzfilter 6, durch das die Zündempfindlichkeit der betreffenden Gase verringert wird, ist durch das Schutzgehäuse 2 ebenfalls vor Schlageinwirkung und Zerstörung geschützt. Die Zylinderwand des Schutzgehäuses 2 weist im Abstand voneinander eine Gaseintrittsöffnung 7 und eine Gasaustrittsöffnung 8 auf, die über Anschlussstutzen 9, 10 an eine Pumpe (nicht dargestellt) angeschlossen werden. Bei diesem im Pumpenbetrieb arbeitenden Infrarot-Sensor gelangt das zu messende Gas als Gasstrom ohne jegliche zeitliche Verzögerung über die Gaseintrittsöffnung 7 und die Gasaustauschöffnung 5 mit Staub- und Feuchteschutzfilter 6 in den zwischen der Lampe 3 und dem Infrarot-Detektor 4 gebildeten Messbereich und wird über die Gasaustrittsöffnung 8 wieder nach außen geleitet.

Die Infrarot-Quelle 3 und der Infrarot-Detektor 4 sind zum Beispiel durch Kleben so in die Stirnwände des Messgehäuses eingebunden, dass deren sichere Halterung gewährleistet ist. Eine Zerstörung des Glaskolbens der Lampe und damit ein Freilegen der Heizwendel als Zündquelle ist insbesondere auch bei extremer Schlagwirkung auf den Infrarot-Sensor nicht möglich, da die im Innern des Schutzgehäuses 2 befindlichen Bauteile, aber auch die stirnseitigen Verschlussplatten 11 im Schutzgehäuse 2 durch dessen schlagfeste Ausführung nicht beschädigt werden können.

Aufgrund der oben beschriebenen schlagsicheren und staubgeschützten Ausbildung des Infrarot-Sensors entsprechend der Zündschutzart "e" kann dieser - wie ein druckfest abgekapselter Infrarot-Sensor gemäß der Zündschutzart "d" - in der Gefahrenzone "1", die etwa 95% aller auftretenden Fälle einschließt, betrieben werden. Der Fertigungs- und Prüfaufwand für den in der Zündschutzart "e" ausgebildeten Infrarot-Sensor ist jedoch deutlich geringer als für einen unter den gleichen Bedingungen einsetzbaren Infrarot-Sensor in der druckfest abgekapselten Zündschutzart "d".

Eine erweiterte Ausführungsform des in Fig. 1 beschriebenen Infrarot-Sensors gibt Fig. 2 wieder. Bei diesem Infrarot-Sensor, bei dem der Infrarot-Detektor 4 mindestens einen gasspezifischen Gasmesskanal λ1, *λ*2, λ3 und einen Referenzkanal λ0 für ein 0-Signal aufweist, sind zur Signalverarbeitung am Infrarot-Detektor 4 zusätzlich ein Temperatur- und Feuchtesensor 12 und ein Drucksensor 13 vorgesehen. Dadurch können das Messergebnis beeinflussende Temperaturen, Feuchtigkeit und Drücke bei der Gasbestimmung berücksichtigt bzw. kompensiert werden.

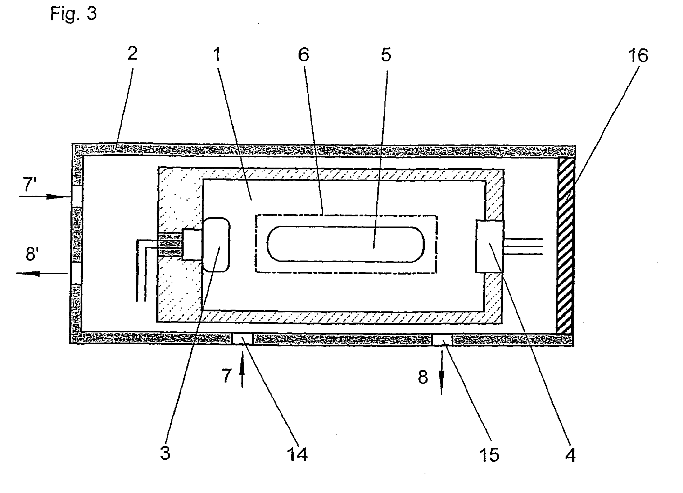

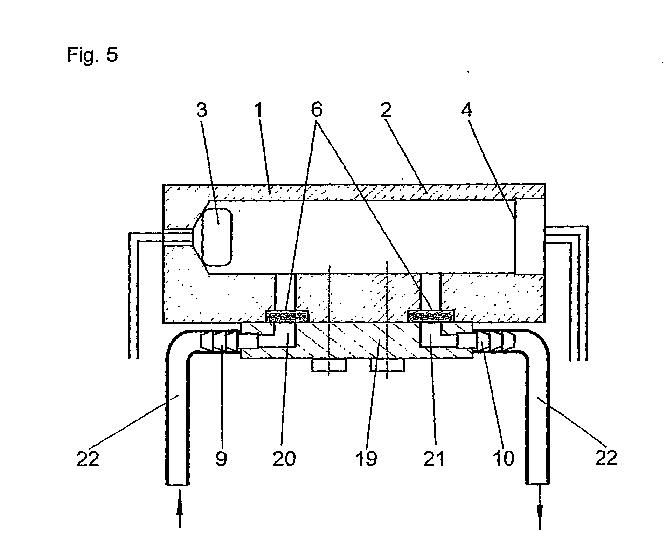

Fig. 3 zeigt einen zur Anwendung in der Zone "0" zugelassenen Infrarot-Sensor, der ebenfalls für den Pumpenbetrieb vorgesehen ist. In diesem Fall ist die Messkammer 1 entsprechend den in den Figuren 1 und 2 dargestellten Ausführungsvarianten ausgebildet und das Schutzgehäuse 2 ist schlagsicher ausgeführt. Zusätzlich ist die Messkammer 1 aber auch durch eine druckfeste Ausbildung des Schutzgehäuses 2 nach außen druckfest verkapselt. Zu diesem Zweck sind die Gaseintrittsöffnung 7 und die Gasaustrittsöffnung 8 durch ein Staub- und Feuchteschutzfilter 15, 14 aus Sintermaterial druckfest verschlossen und auch die Montageöffnungsverschlüsse 16 des Schutzgehäuses 2 sind druckfest eingepasst und verklebt oder vergossen. Damit steht ein Infrarot-Sensor in zwei voneinander unabhängigen Zündschutzarten, nämlich "e" (erhöhte Sicherheit) und "d" (druckfeste Kapselung) zur Verfügung. Dieser Infrarot-Sensor genügt aufgrund der beiden voneinander getrennten Zündschutzarten höchsten Sicherheitsanforderungen und kann in der Zone "0" eingesetzt werden. In Fig. 3 sind zwei Varianten für die Anordnung der Gaseintritts- und -austrittsöffnungen 7, 8 bzw. 7', 8' dargestellt.

### Bezugszeichenliste

- 1: Messkammer (separates Gehäuse)
- 2: Schlagsicheres Schutzgehäuse
- 3: Infrarot-Quelle (Lampe)
- 4: Infrarot-Detektor (Halbleiterdetektor)
- 5: Gasaustauschöffnung in 1
- 6: Hochpermeables Staub- und Feuchteschutzfilter
- 7: Gaseintrittsöffnung
- 8: Gasaustrittsöffnung
- 9: Anschlussstutzen
- 10: Anschlussstutzen
- 11: Stirnseitige Verschlussplatten
- 12: Temperatur- und Feuchtesensor
- 13: Drucksensor
- 14: Druckfester Staub- und Feuchteschutzfilter (Pumpenbetrieb)
- 15: Druckfester Staub- und Feuchteschutzfilter (Pumpenbetrieb)
- 16: Montageöffnungsverschluss
- 17: Druckfester Staub- und Feuchteschutzfilter (Diffusionsbetrieb)
- 18: Druckfester Staub- und Feuchteschutzfilter (Diffusionsbetrieb)
- 19: Schlagschutzblock
- 20: Gaskanal in 19
- 21: Gaskanal in 19
- 22: Gasleitung

## Patentansprüche

1. Infrarotsensor für Gasmessgeräte mit Explosionsschutz, bestehend aus einer von einem Innengehäuse gebildeten Messkammer (1), in der eine Infrarotquelle (3) und ein Infrarotdetektor (4) eigensicher angeordnet sind und die mindestens eine Gasein- und -austrittsöffnung (5) mit dieser zugeordnetem Staub- und Feuchteschutzfilter (6) aufweist, wobei
- die Gasein- und -austrittsöffnung (5) mit einem Staub- und Feuchteschutzfilter (6) aus einem hochpermeablen, nicht druckfesten Material abgedeckt ist; und
- das Innengehäuse von einem separaten mit weiteren Gaseintritts- und -austrittsöffnungen (7, 8) versehenen Schutzgehäuse (2) umgeben ist, das bis zu einer Belastung von mindestens 7 Joule schlagfest ausgebildet ist.

2. Infrarotsensor für Gasmessgeräte mit Explosionsschutz, bestehend aus einer von einem Innengehäuse gebildeten Messkammer (1), in der eine Infrarotquelle (3) und ein Infrarotdetektor (4) eigensicher angeordnet sind, und die mindestens eine Gaseintritts - und austrittsöffnung (5) mit dieser zugeordnetem Staubund Feuchteschutzfilter (6) aufweist, wobei
- die Gaseintritts- und -austrittsöffnung (5) der Messkammer (1) mit einem Staub- und Feuchteschutzfilter (6) aus einem hochpermeablen, nicht druckfesten Material abgedeckt ist; und
- das Innengehäuse von einem separaten, mit weiteren Gaseintritts- und -austrittsöffnungen (7, 8) versehenem Schutzgehäuse (2) umgeben ist, das bis zu einer Belastung von mindestens 7 Joule schlagfest ausgebildet ist; wobei
- die Gaseintritts- und -austrittsöffnungen (7, 8) des Schutzgehäuses (2) mit druckfest ausgebildeten und druckfest montierten Staub- und Feuchteschutzfiltern (14, 15; 17, 18) abgedeckt sind

3. Infrarotsensor nach einem der Ansprüche 1, 2, **dadurch gekennzeichnet, dass** die hochpermeablen Staub- und Feuchteschutzfilter (6) aus einer Metallgaze oder einem hochpermeablen Kunststoff und die druckfesten Staub- und Feuchteschutzfilter (14, 15; 17, 18) aus einem druckfesten Sintermaterial bestehen.

4. Infrarotsensor nach einem der Ansprüche 1 bis 3, **dadurch gekennzeichnet, dass** den im Schutzgehäuse (2) ausgebildeten Gaseintritts- und -austrittsöffnungen (7, 8) Anschlussstutzen (9, 10) für die Gaszu- und -abführung im Pumpenbetrieb zugeordnet sind.

5. Infrarotsensor nach Anspruch 2 oder 3, **dadurch gekennzeichnet, dass** das Schutzgehäuse (2) und die druckfesten Staub- und Feuchteschutzfilter (14, 15; 17, 18) bis zu einem Druck von mindestens 10 bar belastbar sind.

## Claims

1. An infrared sensor for gas-measuring devices with explosion-proof protection, consisting of a measuring chamber (1), formed by an inner casing, in which measuring chamber (1) an infrared source (3) and an infrared detector (4) are located intrinsically safe and which measuring chamber (1) comprises at least one gas inlet and outlet opening (5) with a dust and moisture filter (6) belonging thereto,
wherein the gas inlet and outlet opening (5) is covered with a dust and moisture filter (6) made by a highly permeable and not pressure-proof material, and
wherein the inner casing is surrounded by a separate protective housing (2) provided with further gas inlet and outlet openings (7, 8) and the impact resistance of the protective housing (2) is ensured up to loads of at least seven joule.

2. An infrared sensor for gas-measuring devices with explosion-proof protection, consisting of a measuring chamber (1), formed by an inner casing, in which measuring chamber (1) an infrared source (3) and an infrared detector (4) are located intrinsically safe and which measuring chamber (1) comprises at least one gas inlet and outlet opening (5) with a dust and moisture filter (6) belonging thereto,
wherein the gas inlet and outlet opening (5) of the measuring chamber (1) is covered with a dust and moisture filter (6) made by a highly permeable and not pressure-proof material, and
wherein the inner casing is surrounded by a separate protective housing (2) provided with further gas inlet and outlet openings (7, 8) and the impact resistance of the protective housing (2)is ensured up to loads of at least seven joule,
wherein the gas inlet and outlet openings (7, 8) of the protective housing (2) are covered with dust and moisture filters (14, 15; 17, 18) having a pressure-proof design and mounted in a pressure-proof manner.

3. The infrared sensor according to one of the claims 1, 2, **characterized in that** the high permeable dust and moisture filters (6) consist of wire gauze or a highly permeable plastic material and the pressure-proof dust and moisture filters (14, 15; 17, 18) consist of a pressure-proof sintered material.

4. The infrared sensor according to one of the claims 1 to 3 **characterized in that** to the gas inlet and outlet openings (7, 8) formed in the protective housing (2) are belonging fittings (9, 10) for the gas supply and discharge in pump operation.

5. The infrared sensor according to claim 2 or 3, **characterized in that** the protective housing (2) and the dust and moisture filters (14, 15; 17, 18) can be put under an internal pressure of at least 10 bar.

## Revendications

1. Capteur infrarouge pour appareils de mesure de gaz avec protection antidéflagrante, constitué par une chambre de mesure (1) formée par un boîtier intérieur, dans laquelle sont agencés une source infrarouge (3) et un détecteur infrarouge (4) à sécurité intrinsèque et laquelle présente au moins un orifice d'entrée et de sortie de gaz (5) avec filtre protecteur de poussière et d'humidité (6) associée à celui-ci, dans lequel
- l'orifice d'entrée et de sortie de gaz (5) est recouvert par un filtre protecteur de poussière et d'humidité (6) en un matériau hautement perméable et non résistant à la pression ; et
- le boîtier intérieur est entouré par un boîtier de protection (2) séparé pourvu d'autres orifices d'entrée et de sortie de gaz (7, 8) qui est réalisé de manière à résister à des chocs jusqu'à une charge d'au moins 7 Joule.

2. Capteur infrarouge pour appareils de mesure de gaz avec protection antidéflagrante, constitué par une chambre de mesure (1) formée par un boîtier intérieur, dans laquelle sont agencés une source infrarouge (3) et un détecteur infrarouge (4) à sécurité intrinsèque et laquelle présente au moins un orifice d'entrée et de sortie de gaz (5) avec filtre protecteur de poussière et d'humidité (6) associée à celui-ci, dans lequel
- l'orifice d'entrée et de sortie de gaz (5) de la chambre de mesure (1) est recouvert par un filtre protecteur de poussière et d'humidité (6) en un matériau hautement perméable et non résistant à la pression ; et
- le boîtier intérieur est entouré par un boîtier de protection (2) séparé pourvu d'autres orifices d'entrée et de sortie de gaz (7, 8) qui est réalisé de manière à résister à des chocs jusqu'à une charge d'au moins 7 joule ; dans lequel
- les orifices d'entrée et de sortie de gaz (7, 8) du boîtier de protection (2) sont recouverts par des filtres protecteurs de poussière et d'humidité (14, 15 ; 17, 18) réalisés résistants à la pression et montés de manière résistante à la pression.

3. Capteur infrarouge selon l'une des revendications 1 et 2, **caractérisé en ce que** les filtres protecteurs de poussière et d'humidité (6) hautement perméables sont constitués par une gaze métallique ou par une matière plastique hautement perméable et les filtres protecteurs de poussière et d'humidité (14, 15 ; 17, 18) résistants à la pression sont constitués par un matériau fritté résistant à la pression.

4. Capteur infrarouge selon l'une des revendications 1 à 3, **caractérisé en ce qu'**aux orifices d'entrée et de sortie de gaz (7, 8) réalisés dans le boîtier de protection (2) sont associées des tubulures de raccordement (9, 10) pour l'amenée et l'évacuation de gaz lors du fonctionnement de la pompe.

5. Capteur infrarouge selon la revendication 2 ou 3, **caractérisé en ce que** le boîtier de protection (2) et les filtres protecteurs de poussière et d'humidité (14, 15 ; 17, 18) résistants à la pression peuvent être sollicités jusqu'à une pression d'au moins 10 bar.
